# EUROPÄISCHE PATENTANMELDUNG

(11) **EP 1 693 789 A1**
(43) Veröffentlichungstag der Anmeldung: **23.08.2006**
(21) Anmeldenummer: 05003210.1
(22) Anmeldetag: 16.02.2005
(51) Int. Cl.: G06K 19/077, G06K 19/04, G09F 3/04

(54) **Kunststoffträger mit Transponder**

(71) Anmelder: Huber, Johann, 4484 Kronstorf (AT)
(72) Erfinder: Huber, Johann, 4484 Kronstorf (AT)
(74) Vertreter: Vetter, Hans

(57) **Zusammenfassung**

Es wird ein Kunststoffträger mit einem einen Datenspeicher aufweisenden Transponder zur drahtlosen Datenübertragung vom und zum plättchenartigen Kunststoffträger vorgeschlagen, der mit Befestigungsmitteln zur Befestigung an elektronisch zu kennzeichnenden Gegenständen versehen ist. Der Transponder ist an oder in einem vom Kunststoffträger getrennten Transponderträger (18) angeordnet, der mit dem Kunststoffträger verrastbar oder verklemmbar ist. Hierdurch ist der mit dem Transponder versehene Transponderträger wiederverwendbar und kann nach dem bestimmungsgemäßen Gebrauch im Kunststoffträger in einem neuen Kunststoffträger wiederverwendet werden. Hierdurch werden die Kosten insgesamt deutlich reduziert.

## Beschreibung

Die Erfindung betrifft einen Kunststoffträger mit einem einen Datenspeicher aufweisenden Transponder zur drahtlosen Datenübertragung vom und zum plättchenartigen Kunststoffträger, der mit Befestigungsmitteln zur Befestigung an elektronisch zu kennzeichnenden Gegenständen versehen ist.

Bei einem derartigen, beispielsweise aus der EP 1246152 A1 bekannten Kunststoffträger ist der Transponder fest mit dem Kunststoffträger verbunden, insbesondere in das Kunststoffmaterial eingeschweißt. Dies hat den Nachteil, dass der Transponder zusammen mit dem nur einmal verwendbaren Kunststoffträger, der fest mit dem jeweiligen zu kennzeichnenden Gegenstand verbunden werden muss, verloren geht. Bei dem als billiges Massenprodukt hergestellten Kunststoffträger bedeutet jedoch der Transponder einen nicht unerheblichen Kostenfaktor, sodass die Gesamtkosten eines solchen mit einem Transponder versehenen Kunststoffträgers für die vorgesehene Anwendung unakzeptabel hoch sind.

Eine Aufgabe der vorliegenden Erfindung besteht darin, einen Kunststoffträger mit Transponder zu schaffen, bei dem die Gesamtkosten deutlich reduziert werden können.

Diese Aufgabe wird erfindungsgemäß durch einen Kunststoffträger mit den Merkmalen des Anspruchs 1 gelöst.

Beim erfindungsgemäßen Kunststoffträger ist der Transponder in vorteilhafter Weise an oder in einem von dem Kunststoffträger getrennten Transponderträger angeordnet, der mit dem Kunststoffträger verrastbar oder verklemmbar ist. Da er somit nicht irreversibel mit dem Kunststoffträger verbunden ist, kann er beispielsweise nach einer Zerstörung des Kunststoffträgers wiederverwendet werden, das heißt, mit einem neuen Kunststoffträger verrastet werden. Dies führt zu deutlich reduzierten Kosten des Kunststoffträgers bzw. der gesamten Anordnung, die damit im Bereich herkömmlicher Kunststoffträger zur Kennzeichnung von Gegenständen ohne Transponder liegen, wie sie beispielsweise in der GB 2075464 A oder EP 248928 A1 beschrieben sind. Man erreicht dadurch die Möglichkeit einer elektronischen Kennzeichnung von Gegenständen bei Kosten, die im herkömmlichen Rahmen von Kunststoffträgern mit Strichcodierung oder optischer Codierung liegen.

Durch die in den Unteransprüchen aufgeführten Maßnahmen sind vorteilhafte Weiterbildungen und Verbesserungen des im Anspruch 1 angegebenen Kunststoffträgers möglich.

In einer bevorzugten Ausführungsform besitzt der Kunststoffträger einen Schlitz zur Aufnahme des plättchenförmigen Transponderträgers, der dadurch besonders gut und sicher gehalten wird, wobei gleichzeitig der Transponder geschützt im Kunststoffträger angeordnet ist.

Der Kunststoffträger besitzt zweckmäßigerweise wenigstens eine flexible Rastzunge zum Einrasten in entsprechende Rastausnehmungen des Transponderträgers, wobei die wenigstens eine Rastzunge vorzugsweise einstückig angeformt oder durch U-förmige Schlitze gebildet ist. Diese Rastzunge ist zweckmäßigerweise mit einem Rastvorsprung versehen, der zum Eingriff in die als Durchgangsloch oder Vertiefung im Transponderträger ausgebildete Rastausnehmung vorgesehen ist.

In einer bevorzugten konstruktiven Ausgestaltung besteht der Kunststoffträger aus einem mit den Befestigungsmitteln versehenen plättchenförmigen Trägerteil und einem plättchenförmigen Abdeckteil, die miteinander verbunden oder verbindbar sind, wobei der Transponderträger dazwischen verrastbar oder verklemmbar ist. Hierdurch lässt sich der Kunststoffträger und der Schlitz zur Aufnahme des Transponderträgers besonders einfach und kostengünstig herstellen, insbesondere dadurch, dass das Trägerteil oder das Abdeckteil mit Befestigungszapfen versehen ist, die zur Befestigung der beiden Teile aneinander zum Eingriff in entsprechende Zapfenaufnahmen des jeweils anderen Teils ausgebildet sind. Diese Zapfen können dabei in vorteilhafter Weise gleichzeitig als Führungen beim Einstecken des Transponderträgers dienen.

In einer weiteren bevorzugten Ausgestaltung ist das Abdeckteil mit einem vorzugsweise topfartigen Vorsprung zum Abschlagen des Abdeckteils vom Trägerteil versehen. Dieser Vorsprung ist so dimensioniert, dass er beim Abschlagen oder Abtrennen entweder das gesamte Abdeckteil zerstört und dadurch abtrennt oder dass die Befestigungszapfen brechen und dadurch das Abdeckteil vom Trägerteil abgelöst wird.

Die Befestigungsmittel sind in an sich bekannter Weise als einstückig angeformte Einschlagvorsprünge zum Einschlagen in den zu kennzeichnenden Gegenstand ausgebildet, insbesondere in einen hölzernen Gegenstand.

Zur Erleichterung des Einschlagens des Kunststoffträgers in den zu kennzeichnenden Gegenstand besitzt er zweckmäßigerweise an seinen vier Ecken in ebenfalls an sich bekannter Weise vier hakenartige Haltevorsprünge, die sich bezüglich der Einschlagvorsprünge in die entgegengesetzte Richtung erstrecken und die zum Anstecken an den Hammerkopf eines Einschlaghammers ausgebildet sind.

Der Transponderträger ist bevorzugt als langgestrecktes Plättchen ausgebildet und trägt neben dem Transponder eine Sende- und/oder Empfangsantenne, die ebenfalls im Plättchenkörper integriert ist.

Als Transponder eignet sich bevorzugt ein RFID-Transponder (Radio Frequency Identification).

Ein Ausführungsbeispiel der Erfindung ist in der Zeichnung dargestellt und in der nachfolgenden Beschreibung näher erläutert. Es zeigen:
- Figur 1: eine perspektivische Ansicht des gesamten Kunststoffträgers mit eingestecktem und eingerastetem Transponderträger als Ausführungsbeispiel der Erfindung,
- Figur 2: eine perspektivische Rückansicht des Abdeckteils des Kunststoffträgers,
- Figur 3: eine perspektivische Rückansicht des Trägerteils des Kunststoffträgers und
- Figur 4: eine perspektivische Schrägansicht dieses Trägerteils.

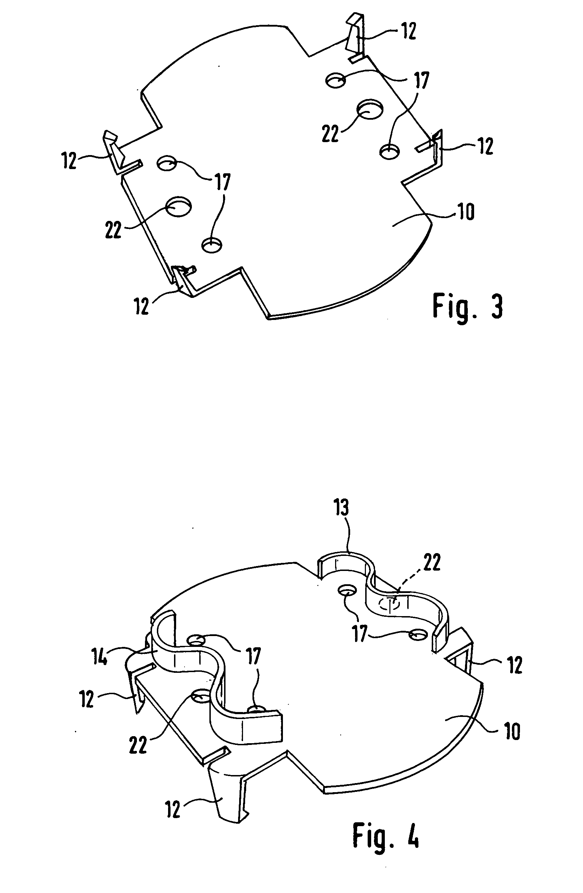

Der in den Figuren dargestellte Kunststoffträger ist zweiteilig aufgebaut und besteht aus einem plättchenförmigen Trägerteil 10 und einem plättchenförmigen Abdeckteil 11. Das in den Figuren 3 und 4 in zwei Ansichten dargestellte Trägerteil besitzt an den vier Ecken vier hakenartige, einstückig angeformte Haltevorsprünge 12. Diese dienen zum Anstecken des gesamten Kunststoffträgers an einen nicht dargestellten Einschlaghammer, mit dessen Hilfe der Kunststoffträger beispielsweise gegen die Stirnseite eines Rundholzes geschlagen wird. Dabei dringen die aus Figur 4 erkennbaren wellenbandartigen Einschlagvorsprünge 13, 14 in diese Stirnseite ein und fixieren dadurch den Kunststoffträger am Rundholz. Die vier hakenartigen Haltevorsprünge 12 greifen dabei in eine Ringnut des Hammerkopfes des Einschlaghammers ein. Dies ist im eingangs angegebenen Stand der Technik oder in der DE 3837175 näher beschrieben.

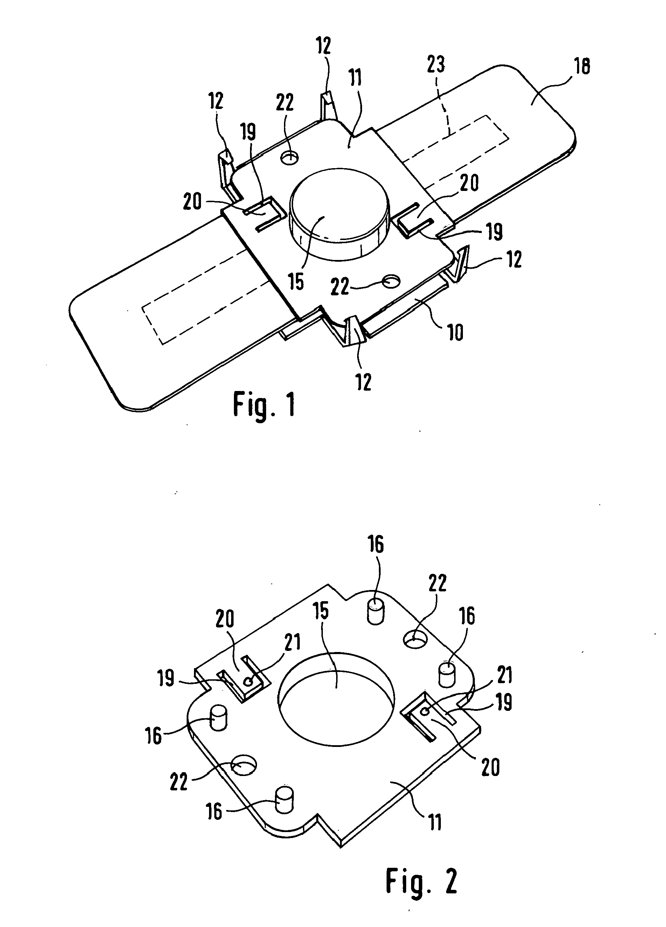

Das Abdeckteil 11 besitzt mittig einen topfartigen Vorsprung 15 und weist an den vier Eckbereichen vier gegenüber dem topfartigen Vorsprung 15 in die entgegengesetzte Richtung weisende Befestigungszapfen auf, die zum Eingriff in vier entsprechende Befestigungsaufnahmen 17 des Trägerteils 10 ausgebildet sind. Die Zahl der Befestigungszapfen und Befestigungsaufnahmen kann auch geringer sein, z.B. 2 oder 3, oder größer sein. Das Abdeckteil 11 wird zur Montage so mit dem Trägerteil 10 zusammengesteckt, dass die Befestigungszapfen 16 in die Befestigungsaufnahmen 17 eingreifen. Dort werden sie durch Verklemmen, Verrasten, Verkleben und/oder Verschweißen fixiert, sodass der in Figur 1 dargestellte Kunststoffträger gebildet wird.

Beim Fixieren des Abdeckteils 11 am Trägerteil 10 wird ein spaltartiger Zwischenraum zwischen Abdeckteil 11 und Trägerteil 10 freigelassen, sodass ein plättchenförmiger Transponderträger 18 dazwischen eingeschoben werden kann. Die Befestigungszapfen 16 dienen dabei zur Führung.

Durch Einformen von zwei U-förmigen Schlitzen 19 werden im Abdeckteil 11 zwei elastische, federnde Zungen 20 gebildet, die jeweils an der im montierten Zustand zum Trägerteil 10 hinweisenden Seite einen Rastvorsprung 21 besitzen. Dieser Rastvorsprung greift beim Einschieben des Transponderträgers 18 in zwei entsprechende Durchgangslöcher dieses Transponderträgers 18 ein und verrastet dabei den Transponderträger 18 im Kunststoffträger. Die Durchgangslöcher im Transponderträger 18 sind in der Darstellung nicht erkennbar.

Anstelle von zwei elastischen Zungen 20 kann diese Zahl selbstverständlich auch variieren. Im einfachsten Falle kann nur eine einzige Federzunge vorgesehen sein, wobei vier Federzungen sich als günstig erwiesen haben, um den Transponderträger 18 fest im Kunststoffträger zu verrasten. Weiterhin können in alternativen Ausführungen auch andere bekannte Verrastungsmittel vorgesehen sein, beispielsweise Rastmittel, die in randseitigen, kerbenartigen Ausnehmungen des Transponderträgers 18 einrasten.

Das Trägerteil 10 und das Abdeckteil 11 weisen jeweils noch zwei im montierten Zustand miteinander fluchtende Durchgangsbohrungen 22 an entgegengesetzten Seitenbereichen auf, die zum Auffädeln des Kunststoffträgers auf einen U-förmigen Aufnehmer aus Metall oder Kunststoffmaterial eines nicht dargestellten Trägermagazins dienen.

Das Abdeckteil 11 und das Trägerteil 10 bestehen jeweils aus einem Kunststoffmaterial, wobei es sich auch um ein Kunststoffmaterial handeln kann, das sich bei der Papierherstellung in den dabei verwendeten Prozessen auflöst.

Anstelle der beschriebenen zweiteiligen Ausführung des Kunststoffträgers kann dieser prinzipiell auch einstückig aus Kunststoff gespritzt werden, wobei Verrastungsmöglichkeiten zur Verrastung des Transponderträgers vorgesehen sein müssen.

Der Tranponderträger 18 ist als langgestrecktes Kunststoffplättchen ausgebildet und enthält integral einen Transponder, beispielsweise einen RFID-Transponder (Radio Frequency Identification), sowie eine damit verbundene Antenne 23, um die Reichweite zu vergrößern, wenn der einen Speicherchip enthaltende Transponder drahtlos mit Kennzeichnungsdaten versehen wird oder wenn solche Kennzeichnungsdaten drahtlos mittels eines entsprechenden Lesegeräts (zum Beispiel RFID-Lesegerät) ausgelesen werden.

In praktischen Anwendungen wird entweder der mit dem Transponderträger versehene Kunststoffträger vormontiert geliefert (mit oder ohne gespeicherte Daten) und so in einen Holzstamm eingeschlagen oder in einen zuvor an einem Holzstamm fixierten Kunststoffträger wird nachträglich ein Transponderträger eingeschoben und eingerastet.Mittels einer tragbaren Sende- und Empfangseinrichtung können dann die erforderlichen oder gewünschten Daten dieses Holzstammes oder Rundholzes eingegeben oder ergänzt werden, soweit sie noch nicht gespeichert waren. Dabei handelt es sich beispielsweise um die Stamm-Seriennummer, eine Stamm-Subnummer, die Holzart, die Länge, den Durchmesser, die Güteklasse und dergleichen. Weiterhin können noch der Name des Forstbetriebs, der Name des Schlägerers und der Name des Rückers eingegeben werden, später noch der Name des Transportbetriebs oder dergleichen. Der Stamm kann dadurch jederzeit später drahtlos identifiziert werden, sei es bei der Lagerhaltung, der Inventur, der Kennzeichnung von Schnittholzpaketen, der Beladung und Entladung vom Lkw (Ladeliste) und dergleichen. Eine solche Ladeliste entsteht dann beispielsweise automatisch durch das Lesen der Transponder bei der Beladung eines Lkw oder dergleichen, sodass beispielsweise auch bei der Einfahrt des Lkw in den Bereich eines Weiterverarbeitungsbetriebs sofort die Ladeliste drahtlos übermittelt wird. Elektronisch kann dann die angekündigte Liste mit der aktuellen Liste verglichen werden. Bei der Lagerhaltung können auf einfache Weise zugeführte und weggenommene Stämme automatisch erfasst werden. Beim Einschnitt in einem Sägewerk können eine automatische Einschnittverbuchung, eine Ausbeuterechnung (auch stammweise) und eine automatische Lagerabbuchung erfolgen. Im Wald selbst kann eine Bestandsaufnahme für den Revierförster oder eine Rundholzübernahme durch einen Käufer auf einfache Weise erfolgen.

Das Ablösen des Transponderträgers zur Wiederverwendung vor der Holzverarbeitung kann ebenfalls automatisch erfolgen. Durch ein Abschlagmesser kann jeweils der topfartige Vorsprung 15 des Abdeckteils 11 abgeschlagen werden, sodass entweder das Abdeckteil 11 zerbricht oder die Befestigungszapfen 16 brechen. Das Abdeckteil 11 fällt dann ganz oder in Stücken in einen Auffangbehälter zusammen mit dem dann losen Transponderträger 18. Die Transponderträger können dann eingesammelt und die Daten gelöscht werden. Dann können die Transponderträger 18 wieder neu verwendet und in einen neuen Kunststoffträger eingesetzt werden.

## Patentansprüche

1. Kunststoffträger mit einem einen Datenspeicher aufweisenden Transponder zur drahtlosen Datenübertragung vom und zum plättchenartigen Kunststoffträger, der mit Befestigungsmitteln (13, 14) zur Befestigung an elektronisch zu kennzeichnenden Gegenständen versehen ist, **dadurch gekennzeichnet, dass** der Transponder an oder in einem vom Kunststoffträger getrennten Transponderträger (18) angeordnet ist, der mit dem Kunststoffträger verrastbar oder verklemmbar ist.

2. Kunststoffträger nach Anspruch 1, **dadurch gekennzeichnet, dass** er einen Schlitz zur Aufnahme des plättchenförmigen Transponderträgers (18) besitzt.

3. Kunststoffträger nach Anspruch 2, **dadurch gekennzeichnet, dass** er wenigstens eine flexible Rastzunge (20) zum Einrasten in eine entsprechende Rastausnehmung des Transponderträgers (18) besitzt, die vorzugsweise einstückig angeformt oder durch U-förmige Schlitze (19) gebildet ist.

4. Kunststoffträger nach Anspruch 3, **dadurch gekennzeichnet, dass** die wenigstens eine Rastzunge (20) mit einem Rastvorsprung (21) versehen ist, der zum Eingriff in die als Durchgangsloch oder Vertiefung im Transponderträger (18) ausgebildete Rastausnehmung vorgesehen ist.

5. Kunststoffträger nach einem der vorhergehenden Ansprüche, **dadurch gekennzeichnet, dass** er aus einem mit den Befestigungsmitteln (13, 14) versehenen plättchenförmigen Trägerteil (10) und einem plättchenförmigen Abdeckteil (11) besteht, die miteinander verbunden oder verbindbar sind, wobei der Transponderträger (18) dazwischen verrastbar oder verklemmbar ist.

6. Kunststoffträger nach Anspruch 5, **dadurch gekennzeichnet, dass** das Trägerteil (10) oder das Abdeckteil (11) mit Befestigungszapfen (16) versehen ist, die zur Befestigung der beiden Teile (10, 11) aneinander zum Eingriff in entsprechende Zapfenaufnahmen (17) des jeweils anderen Teils ausgebildet sind.

7. Kunststoffträger nach Anspruch 5 oder 6, **dadurch gekennzeichnet, dass** das Abdeckteil (11) mit einem vorzugsweise topfartigen Vorsprung (15) zum Abschlagen des Abdeckteils (11) vom Trägerteil (10) versehen ist.

8. Kunststoffträger nach einem der vorhergehenden Ansprüche, **dadurch gekennzeichnet, dass** die Befestigungsmittel (13, 14) als einstückig angeformte Einschlagvorsprünge zum Einschlagen in den zu kennzeichnenden Gegenstand ausgebildet sind.

9. Kunststoffträger nach Anspruch 8, **dadurch gekennzeichnet, dass** an seinen vier Ecken vier hakenartige Haltevorsprünge, (12) angeformt sind, die sich bezüglich der Einschlagvorsprünge (13, 14) in die entgegengesetzte Richtung erstrecken und die zum Anstecken an den Hammerkopf eines Einschlaghammers ausgebildet sind.

10. Kunststoffträger nach einem der vorhergehenden Ansprüche, **dadurch gekennzeichnet, dass** der Transponderträger (18) als langgestrecktes Plättchen ausgebildet ist und neben dem Transponder eine Sende- und/oder Empfangsantenne (23) trägt.

11. Kunststoffträger nach einem der vorhergehenden Ansprüche, **dadurch gekennzeichnet, dass** der Transponder als RFID-Transponder ausgebildet ist.
